# EUROPÄISCHE PATENTSCHRIFT

(11) **EP 3 460 419 B1**
(45) Veröffentlichungstag und Bekanntmachung des Hinweises auf die Patenterteilung: **01.04.2020**
(21) Anmeldenummer: 17192605.8
(22) Anmeldetag: 22.09.2017
(51) Int. Cl.: G01F 15/00, G01L 7/00, G01D 1/00, G01N 9/00, G01F 23/00, G05B 19/00

(54) **MESSANORDNUNG, MESSGERÄT MIT EINER MESSANORDNUNG UND VERFAHREN ZUM BETREIBEN DES MESSGERÄTS**
MEASUREMENT ASSEMBLY, MEASURING DEVICE WITH A MEASUREMENT ASSEMBLY AND METHOD FOR OPERATING THE MEASUREMENT DEVICE
AGENCEMENT DE MESURE, APPAREIL DE MESURE DOTÉ D'UN AGENCEMENT DE MESURE ET MÉTHODE POUR OPÉRER L'APPAREIL DE MESURE

(43) Veröffentlichungstag der Anmeldung: 27.03.2019
(73) Patentinhaber: VEGA Grieshaber KG, 77709 Wolfach (DE)
(72) Erfinder: KÖRNLE, Ralf, 77736 Zell a. H. (DE)
(74) Vertreter: Maiwald Patent- und Rechtsanwaltsgesellschaft mbH

(56) Entgegenhaltungen:
- DE-A1- 3 727 122
- DE-A1-102014 107 991
- GB-A- 2 084 827
- US-A- 4 916 381
- US-A1- 2004 125 528
- US-A1- 2014 176 092
- US-A1- 2014 347 033

## Beschreibung

### Gebiet der Erfindung

Die vorliegende Erfindung betrifft eine Messanordnung zur Bestimmung einer Messgröße sowie ein Messgerät mit einer solchen Messanordnung. Das Messgerät kann insbesondere als Füllstandmessgerät, als Pegelmessgerät, als Fließgeschwindigkeitsmessgerät, als Durchflussmessgerät, als Dichtemessgerät und/oder als Druckmessgerät ausgebildet sein. Ferner betrifft die Erfindung ein Verfahren zum Betreiben eines solchen Messgeräts.

### Hintergrund der Erfindung

Insbesondere im Bereich der industriellen Prozessautomation befinden sich Sensoren, Messschaltungen und/oder Messanordnungen zur eigentlichen Bestimmung eines Messwertes einer Messgröße und die zugehörigen Auswerteschaltungen regelmäßig nicht an demselben Ort. Es kann daher erforderlich sein, ermittelte Messwerte und/oder Messsignale über weite Strecken störungsfrei zu übertragen. Auch kann es im Hinblick auf eine Austauschbarkeit der Messschaltungen vorteilhaft sein, wenn ein einheitliches Messsignal verwendet wird. In der Industrie hat sich daher die Zweileitertechnik etabliert, mit Hilfe derer Messsignale in Form von Stromsignalen übertragen werden können. Beispielsweise können Messwerte der Messschaltung in ein Messsignal mit einer Stromstärke zwischen 4 und 20 mA überführt und so über weite Strecken störungsarm übertragen werden.

Dokument US 2014/0347033 A1 beschreibt eine Messanordnung mit einer Stromregelstufe.

### Zusammenfassung der Erfindung

Ausführungsformen der Erfindung erlauben in vorteilhafter Weise, eine kostengünstige, zuverlässige und robuste Messanordnung mit einem reduzierten Schaltungsaufwand sowie einer reduzierten Leistungsaufnahme bereitzustellen.

Ein Aspekt der Erfindung betrifft eine Messanordnung zur Bestimmung einer Messgröße. Die Messgröße kann insbesondere mit einem Füllstand eines Mediums in einem Behälter, mit einem Pegelstand eines Mediums, mit einem Durchfluss eines Mediums, mit einer Fließgeschwindigkeit eines Mediums, mit einer Dichte eines Mediums und/oder mit einem Druck eines Mediums korrelieren. Die Messanordnung weist eine Messschaltung zur Bestimmung eines Messwertes der Messgröße, einen Messausgang zur Ausgabe eines mit dem Messwert korrelierenden Messstromes und einen Stromregler zur Vorgabe und/oder zum Einstellen einer Messstromstärke des Messstromes in Abhängigkeit des Messwertes auf. Der Stromregler kann dabei mit der Messschaltung gekoppelt sein und basierend auf einem Ausgangssignal der Messschaltung die Messstromstärke des Messstromes einstellen und/oder vorgeben. Die Messstromstärke kann dabei mit dem Messwert der Messgröße korrelieren und gleichsam kann der Messstrom und/oder die Messstromstärke als Messsignal dienen. Weiter weist die Messanordnung ein erstes Stellglied, insbesondere ein erstes regelbares Stellglied, auf, welches in einer Zuführleitung zum Zuführen eines Betriebsstromes zu der Messschaltung angeordnet ist. Über das erste Stellglied kann der Messschaltung der Betriebsstrom zugeführt werden. Auch kann das erste Stellglied zum Einstellen einer Betriebsstromstärke des Betriebsstromes dienen. Ferner weist die Messanordnung ein zweites Stellglied, insbesondere ein zweites regelbares Stellglied, zum Abführen eines Laststromes aus der Zuführleitung auf, wobei der Stromregler über das zweite Stellglied mit dem ersten Stellglied gekoppelt ist. Das zweite Stellglied kann dabei in einer mit der Zuführleitung gekoppelten Abführleitung zum Abführen des Laststromes angeordnet sein. Ferner ist der Stromregler dazu eingerichtet, durch Steuerung des zweiten Stellgliedes das erste Stellglied zu steuern und gleichzeitig eine Laststromstärke des Laststromes einzustellen.

Die Messanordnung kann insbesondere genau einen Stromregler aufweisen, der dazu eingerichtet ist, die Messstromstärke vorzugeben und/oder einzustellen sowie die Laststromstärke einzustellen. Die Laststromstärke kann dabei mit einer Differenz der Messstromstärke des Messstromes und der Betriebsstromstärke des Betriebsstromes korrelieren und/oder durch diese Differenz gegeben sein.

Das erste Stellglied kann in der Zuführleitung angeordnet sein, welche den Messstrom und/oder den Betriebsstrom führen kann. Das zweite Stellglied kann in einer mit der Zuführleitung gekoppelten Abführleitung zum Abführen des Laststromes angeordnet sein. Das zweite Stellglied kann dabei über die Abführleitung oder direkt mit dem ersten Stellglied gekoppelt und/oder elektrisch verbunden sein. Durch Koppelung des Stromreglers an das zweite Stellglied kann durch ein geeignetes Steuersignal des Stromreglers, welches mit dem Messwert der Messgröße korrelieren kann und/oder etwa ein spannungsgesteuertes Steuersignal sein kann, das zweite Steuerglied entsprechend dem Messwert der Messgröße gesteuert werden. Durch Kopplung des zweiten Steuergliedes an das erste Steuerglied kann ferner durch den Stromregler auch das erste Steuerglied, zumindest indirekt und/oder mittelbar über die Steuerung des zweiten Steuergliedes, gesteuert und/oder eingestellt werden. Das erste Stellglied und/oder das zweite Stellglied können beispielsweise als regelbare Widerstände ausgebildet sein, wobei ein Wert des jeweiligen Widerstands durch den Stromregler eingestellt werden kann. Der Stromregler kann dabei sowohl in Abhängigkeit des Messwertes die Messstromstärke vorgeben und/oder einstellen als auch die Laststromstärke einstellen. Dadurch kann sichergestellt sein, dass der am Messausgang ausgegebene Messstrom stets die dem Messwert entsprechende Messstromstärke hat. Die Messanordnung kann als 4...20 mA Zweileiter-Messanordnung ausgebildet sein, so dass die Messstromstärke zwischen 4 mA und 20 mA liegen kann.

Erfindungsgemäß kann der Stromregler dazu eingerichtet sein, durch Steuerung des zweiten Stellgliedes, etwa durch Anlegen einer Steuerspannung an das zweite Stellglied, das erste Stellglied zu steuern, so dass die Laststromstärke des Laststromes unabhängig von einer über dem ersten Stellglied abfallenden Spannung eingestellt ist. Mit anderen Worten wird bei der erfindungsgemäßen Messanordnung das zweite Stellglied nicht in Abhängigkeit eines Spannungsabfalls über dem ersten Stellglied eingestellt, sondern beispielsweise ausschließlich basierend auf dem von der Messschaltung ermittelten Messwert. Insgesamt kann so der schaltungstechnische Aufwand sowie eine Leistungsaufnahme der Komponenten der Messanordnung reduziert werden, wie nachfolgend näher erläutert.

Bei konventionellen Messanordnungen regelt der Stromregler direkt das erste Stellglied, welches in der Zuführleitung angeordnet ist. Mit einem separaten Stromregler, auch Shuntregler oder Abführstromregler genannt, wird ein Spannungsabfall über dem ersten Stellglied ermittelt und in Abhängigkeit dieses Spannungsabfalls wird das zweite Stellglied betätigt, so dass die Laststromstärke eingestellt werden kann. Damit diese Regelung funktioniert, muss über dem ersten Stellglied stets eine von Null verschiedene Spannung abfallen. Das erste Stellglied darf bei konventionellen Messanordnungen daher nie vollständig durchgesteuert und/oder geöffnet werden, insbesondere nicht wenn das erste Stellglied einen MOSFet-Transistor aufweist.

Bei der erfindungsgemäßen Messanordnung kann der Spannungsabfall über dem ersten Stellglied dagegen nahezu beliebig verringert werden, da die Regelung des zweiten Stellglieds nicht basierend auf dem Spannungsabfall über dem ersten Stellglied erfolgt. Zum einen kann so im Vergleich zu konventionellen Messanordnungen der Abführstromregler entfallen und zum anderen kann der Messschaltung nahezu die maximal mögliche Leistung bereitgestellt werden. Insgesamt kann so eine robuste, zuverlässige, energiesparende und kostengünstige Messanordnung bereitgestellt werden.

Gemäß einer Ausführungsform der Erfindung weist die Messanordnung ferner eine Sollwertgenerierungsschaltung auf, welche zwischen die Messschaltung und den Stromregler gekoppelt ist, wobei die Sollwertgenerierungsschaltung dazu eingerichtet ist, basierend auf dem von der Messschaltung ermittelten Messwert ein mit dem Messwert korrelierendes Spannungssignal als Sollwert an den Stromregler auszugeben. Der Stromregler ist dabei dazu eingerichtet, basierend auf dem Spannungssignal der Sollwertgenerierungsschaltung die Messstromstärke vorzugeben. Der Stromregler kann hierzu einen Differenzverstärker und/oder einen Operationsverstärker (Op-Amp) aufweisen und das Spannungssignal der Sollwertgenerierungsschaltung mit einer Messspannung vergleichen. Zur Ermittlung der Messspannung kann der Stromregler beispielsweise einen Spannungsabfall über einem Messwiderstand der Messanordnung ermitteln. Der Messwiderstand kann dabei in der Zuführleitung und/oder in einer Masseleitung der Messanordnung angeordnet sein. Insbesondere kann der Messwiderstand einen kleinen Temperaturkoeffizienten aufweisen und/oder als gegenüber Temperaturschwankungen unempfindlicher Widerstand ausgebildet sein, so dass die Regelung der Messstromstärke und damit das durch den Messstrom bereitgestellte Messsignal unabhängig von Umgebungseinflüssen ist.

Gemäß einer Ausführungsform der Erfindung weist die Messanordnung ferner eine Z-Diode zur Begrenzung einer an das erste Stellglied angelegten Steuerspannung auf. Die Z-Diode kann mit einer Leitung zur Zuführung des Messstromes zum ersten Stellglied und mit dem zweiten Stellglied gekoppelt sein. Die Leitung kann beispielsweise die Zuführleitung sein. Beispielsweise kann die Z-Diode dem ersten Stellglied vorgeschaltet sein und mit der Zuführleitung sowie der Abführleitung verbunden sein. Eine Sperrrichtung der Z-Diode kann in Richtung der Abführleitung sein. Alternativ oder zusätzlich kann die Messanordnung ferner einen parallel zur Z-Diode geschalteten Widerstand aufweisen.

Gemäß einer Ausführungsform der Erfindung weist das erste Stellglied und das zweite Stellglied jeweils einen Bipolar-Transistor und/oder einen MOSFet-Transistor auf. Das erste Stellglied und das zweite Stellglied können jeweils spannungs- und/oder stromgesteuert sein, so dass über eine an das erste und/oder zweite Stellglied angelegte Spannung und/oder über einen eingeprägten Strom zuverlässig ein Widerstand und/oder eine Stromquelle des ersten und/oder zweiten Stellgliedes eingestellt werden kann.

Gemäß einer Ausführungsform der Erfindung weist die Messanordnung ferner ein zwischen das erste Stellglied und die Messschaltung gekoppeltes Schalterelement auf, wobei das Schalterelement dazu eingerichtet ist, in einem ersten Zustand des Schalterelements das erste Stellglied mit der Messschaltung zu verbinden, so dass der Messschaltung der Betriebsstrom zugeführt wird, und wobei das Schalterelement dazu eingerichtet ist, in einem zweiten Zustand des Schalterelements eine elektrische Verbindung zwischen dem ersten Stellglied und der Messschaltung zu unterbrechen, so dass der gesamte Messstrom als Laststrom über das zweite Stellglied abgeführt wird. Alternativ oder zusätzlich kann die Messanordnung eine Stromüberwachungsschaltung aufweisen, welche dazu eingerichtet ist, zumindest in dem zweiten Zustand des Schalterelements die Messstromstärke des Messstromes unter Bestimmen der Laststromstärke des Laststromes zu ermitteln. Die Stromüberwachungsschaltung kann auch dazu eingerichtet sein, das Schalterelement zu betätigen.

Gemäß einer Ausführungsform der Erfindung weist die Messanordnung ferner einen Abführwiderstand zur Stabilisierung des zweiten Stellgliedes auf, wobei der Abführwiderstand zwischen das zweite Stellglied und eine Masseleitung der Messanordnung gekoppelt ist. Über einen Spannungsabfall über dem Abführwiderstand kann die Stromüberwachungsschaltung in dem zweiten Zustand des Schalterelements die Messstromstärke über die Laststromstärke ermitteln. Dadurch können Komponenten der Messanordnung auf Funktionstüchtigkeit geprüft werden. Auch kann dies zum Rücklesen des Messwertes dienen, etwa wenn eine Komponente der Messanordnung fehlerhaft ist oder ausfällt. Zudem kann der Abführwiderstand einen kleinen Temperaturkoeffizienten aufweisen und/oder unempfindlich gegenüber Temperaturschwankungen sein, so dass als Messwiderstand für den Stromregler ein weiterer Widerstand der Messanordnung, z.B. ein Schutzwiderstand (Ex-/EMV-Widerstand), zur Ermittlung der Messstromstärke und/oder der Messspannung durch den Stromregler dienen kann. Dadurch kann abermals eine Leistungsaufnahme der Messanordnung und/oder der schaltungstechnische Aufwand reduziert werden.

Gemäß einer Ausführungsform der Erfindung ist die Stromüberwachungsschaltung mit der Messschaltung und mit dem Stromregler gekoppelt, wobei die Stromüberwachungsschaltung dazu eingerichtet ist, ein mit dem Messwert korrelierendes Spannungssignal als Sollwert an den Stromregler auszugeben, und wobei der Stromregler dazu eingerichtet ist, basierend auf dem Spannungssignal der Stromüberwachungsschaltung die Messstromstärke vorzugeben und/oder einzustellen. Die Stromüberwachungsschaltung kann ferner mit der Sollwertgenerierungsschaltung gekoppelt sein und eine Sollwertkorrektur des von der Sollwertgenerierungsschaltung ausgegebenen Sollwerts vornehmen.

Gemäß einer Ausführungsform der Erfindung dient die Bestimmung eines Laststromes (I_{L}) und/oder einer Laststromstärke der Bestimmung und/oder Korrektur eines Messstromes (I_{M}) und/oder einer Messstromstärke.

Gemäß einer Ausführungsform der Erfindung ist die Messanordnung dazu eingerichtet, bei Überschreiten eines maximalen Korrekturwertes, welcher etwa von der Sollwertgenerierungsschaltung und/oder der Messschaltung ausgegeben und/oder bestimmt werden kann, eine Fehlermeldung auszugegeben. Alternativ oder zusätzlich kann die Messanordnung dazu eingerichtet sein, den Messstrom (I_{M}) und/oder die Messstromstärke auf einen Wert einzustellen, welcher als Fehlerstrom definiert ist. Auf diese Weise kann eine Fehlermeldung ausgegeben und/oder ein Fehler kann durch die Messanordnung signalisiert werden.

Ein weiterer Aspekt der Erfindung betrifft ein Messgerät mit einer Messanordnung, so wie voranstehend und nachfolgend beschrieben. Das Messgerät kann ein Füllstandmessgerät, ein Pegelmessgerät, ein Fließgeschwindigkeitsmessgerät, ein Durchflussmessgerät, ein Dichtemessgerät und/oder ein Druckmessgerät sein. Insbesondere kann das Messgerät als Zweileiter-Messgerät, etwa als 4...20 mA Zweileiter-Messgerät, ausgebildet sein.

Ein weiterer Aspekt der Erfindung betrifft ein Verfahren zum Betreiben eines Messgeräts mit einer Messanordnung, so wie voranstehend und nachfolgend beschrieben. Das Verfahren weist einen Schritt des Ermittelns eines Messwertes einer Messgröße und einen Schritt des Einstellens einer mit dem Messwert korrelierenden Messstromstärke unter Ansteuern des zweiten Stellglieds mit dem Stromregler sowie unter Ansteuern des ersten Stellglieds durch Ansteuern des zweiten Stellglieds mit dem Stromregler auf. Ferner weist das Verfahren einen Schritt des Ausgebens des mit dem Messwert korrelierenden Messstromes an dem Messausgang auf.

Sämtliche voranstehend und nachfolgend mit Bezug auf die Messanordnung, das Messgerät und/oder das Verfahren beschriebenen Merkmale, Elemente und/oder Funktionen können gleichermaßen Merkmale, Elemente und/oder Funktionen der Messanordnung, des Messgeräts und/oder des Verfahrens sein.

Im Folgenden werden Ausführungsbeispiele der Erfindung unter Bezugnahme auf die Figuren beschrieben.

### Kurze Beschreibung der Figuren

Fig. 1 zeigt ein Messgerät mit einer Messanordnung gemäß einem Ausführungsbeispiel der Erfindung.
Fig. 2 zeigt eine konventionelle Messanordnung gemäß einem Ausführungsbeispiel.
Fig. 3 bis Fig. 5 zeigen jeweils eine Messanordnung gemäß einem Ausführungsbeispiel der Erfindung.
Fig. 6 zeigt ein Flussdiagramm zur Illustration von Schritten eines Verfahrens zum Betreiben eines Messgeräts gemäß einem Ausführungsbeispiel der Erfindung.

Die Figuren sind lediglich schematisch und nicht maßstabsgetreu. In den Figuren können gleiche, gleichwirkende oder ähnliche Elemente mit gleichen Bezugszeichen versehen sein.

### Detaillierte Beschreibung von Ausführungsbeispielen

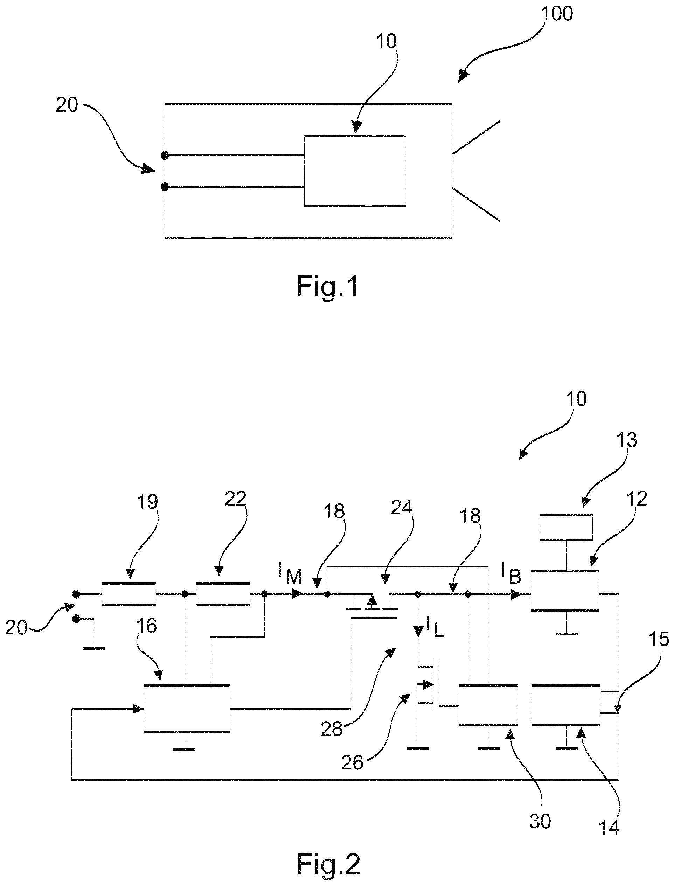

Fig. 1 zeigt ein Messgerät 100 mit einer Messanordnung 10 gemäß einem Ausführungsbeispiel der Erfindung.

Das Messgerät 100 kann insbesondere als ein Füllstandmessgerät, ein Pegelmessgerät, ein Fließgeschwindigkeitsmessgerät, ein Durchflussmessgerät, ein Dichtemessgerät und/oder ein Druckmessgerät ausgebildet sein.

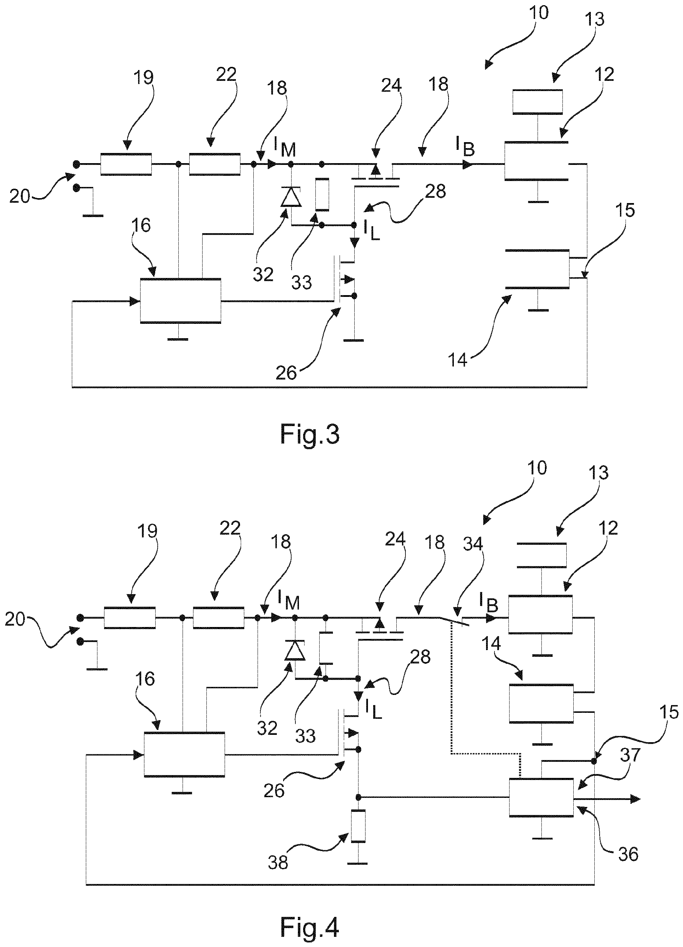

Die Messanordnung 10 des Messgeräts 100 kann beispielsweise wie die in Figuren 3 bis 5 beschriebenen Messanordnungen 10 ausgestaltet sein. Insbesondere kann die Messanordnung 10 des Messgeräts 100 und/oder das Messgerät 100 einen Messausgang 20 zur Ausgabe eines mit einem durch die Messanordnung 10 ermittelten Messwert korrelierenden Messstromes aufweisen. Das Messgerät 100 kann dabei als Zweileiter-Messgerät 100, insbesondere als 4...20 mA Zweileiter-Messgerät 100, ausgebildet sein, wobei eine Messstromstärke des Messstromes repräsentativ für den ermittelten Messwert sein kann.

Fig. 2 zeigt eine konventionelle Messanordnung 10 gemäß einem Ausführungsbeispiel.

Die Messanordnung 10 weist eine Messschaltung 12 zur Ermittlung eines Messwertes einer Messgröße 13 auf, wobei die Messgröße 13 insbesondere mit einem Füllstand eines Mediums in einem Behälter, mit einem Pegelstand eines Gerinnes und/oder Mediums, mit einem Durchfluss eines Mediums, mit einer Fließgeschwindigkeit eines Mediums, mit einer Dichte eines Mediums und/oder mit einem Druck eines Mediums korrelieren kann. Mit anderen Worten kann die Messgröße 13 ein Füllstand, ein Pegelstand, ein Durchfluss, eine Fließgeschwindigkeit, eine Dichte oder ein Druck eines Mediums sein.

Die Messschaltung 12 ist mit einer Sollwertgenerierungsschaltung 14 gekoppelt, welche wiederum mit einem Stromregler 16 gekoppelt ist. Beispielsweise kann über einen Ausgang der Messschaltung 12 ein mit dem ermittelten Messwert korrelierendes Signal an die Sollwertgenerierungsschaltung 14 ausgegeben werden, welche basierend auf dem Signal der Messschaltung 12 ein mit dem Messwert korrelierendes Spannungssignal 15 als Sollwert an den Stromregler 16 ausgeben kann.

Der Stromregler 16 kann etwa einen Differenzverstärker und/oder einen Operationsverstärker (Op-Amp) aufweisen, welcher dazu eingerichtet ist, entsprechend dem von der Sollwertgenerierungsschaltung 14 als Sollwert ausgegebenen Spannungssignal 15 eine Messstromstärke eines Messstromes I_{M} vorzugeben und/oder einzustellen. Der Messstrom I_{M} kann dabei in einer mit der Messschaltung 12 gekoppelten Zuführleitung 18 fließen und über einen Messsaugang 20 ausgegeben werden. Die Messstromstärke des Messstromes I_{M} ist dabei repräsentativ für den ermittelten Messwert, so dass der Messwert als Stromsignal über den Messausgang 20 ausgegeben und störungsarm übertragen werden kann. An dem Messausgang 20 kann ferner eine Betriebsspannung zur Energieversorgung der Messanordnung 10 anliegen.

Damit die Messstromstärke zuverlässig von dem Stromregler 16 eingestellt werden kann, ist dieser parallel zu einem Messwiderstand 22 geschaltet und dazu ausgeführt, einen Spannungsabfall über dem Messwiderstand 22 zu ermitteln und mit dem von der Sollwertgenerierungsschaltung 14 als Sollwert bereitgestellten Spannungssignal 15 zu vergleichen.

Zwischen dem Messausgang 20 und dem Messwiderstand kann ferner ein Schutzwiderstand 19 angeordnet sein, etwa ein Ex- und/oder EMV-Widerstand 19.

Zur präzisen Regelung und/oder Einstellung der Messstromstärke des Messstromes I_{M} weist die Messanordnung 10 ferner ein erstes Stellglied 24 und ein zweites Stellglied 26 auf. Das erste Stellglied 24 ist in der Zuführleitung 18 angeordnet und über das erste Stellglied 24 kann der Messschaltung 12 ein Betriebsstrom I_{B} mit einer Betriebsstromstärke zugeführt werden. Das zweite Stellglied 26 ist dagegen in einer mit der Zuführleitung 18 gekoppelten Abführleitung 28 angeordnet. Über die Abführleitung 28 und/oder das zweite Stellglied 26 kann ein Laststrom I_{L} mit einer Laststromstärke abgeführt werden. Die Abführleitung 28 ist dabei dem ersten Stellglied 24 nachgeschaltet und kann etwa mit einer Masseleitung der Messanordnung 10 verbunden sein. Der Laststrom I_{L} entspricht dabei einer Differenz des Messstromes I_{M} und des Betriebsstromes I_{B}.

Das zweite Stellglied 26 ist ferner mit einem weiteren Stromregler 30, auch Shuntregler 30 oder Abführstromregler 30 genannt, gekoppelt, wobei der Shuntregler 30 parallel zum ersten Stellglied 24 geschaltet ist und dazu ausgeführt ist, einen Spannungsabfall über dem ersten Stellglied 24 zu ermitteln und in Abhängigkeit dieses Spannungsabfalls das zweite Stellglied 26 zu betätigen und/oder einzustellen.

Des Weiteren ist der Stromregler 16 mit dem ersten Stellglied 24 gekoppelt. Eine Regelung bzw. Einstellung der Messstromstärke des Messstromes I_{M} durch den Stromregler 16, das erste Stellglied 24, das zweite Stellglied 26 und den Shuntregler 30 kann wie nachfolgend beschrieben erfolgen. Ist die Messstromstärke beispielsweise höher als die Betriebsstromstärke so muss die Differenz der beiden als Laststromstärke über die Abführleitung 28 abgeführt werden. Hierzu gibt der Stromregler 16 zunächst die Messstromstärke vor, etwa durch Einstellen einer geeigneten Messspannung am Messwiderstand 22. Ferner regelt der Stromregler 16 entsprechend dem ermittelten Messwert das erste Stellglied 24, etwa durch ein geeignetes Spannungssignal. Der Shuntregler 30 ermittelt nun die über dem ersten Stellglied 24 abfallende Spannung und steuert entsprechend diesem Spannungsabfall das zweite Stellglied 26, etwa durch ein geeignetes Spannungssignal. Das erste und zweite Stellglied 24, 26 werden somit entsprechend dem ermittelten Messwert eingestellt und der Laststrom I_{L} wird mit der entsprechenden Laststromstärke über die Abführleitung 28 abgeführt.

Zur genauen Regelung der Messstromstärke des Messstromes I_{M} sollten ein oder mehrere Bauteile verwendet werden, die möglichst unabhängig von

Umgebungseinflüssen, wie z.B. der Temperatur, sind. Im vorliegenden Fall sind das der Messwiderstand 22 und der im Stromregler 16 verwendete Verstärker. Sowohl der Messwiderstand 22 als auch der Stromregler 16 sind mit geringem Temperaturkoeffizienten verfügbar. Ihr Preis ist allerdings im allgemeinen höher als der von Bauteilen mit ansonsten gleichen oder ähnlichen Eigenschaften. Bei einem passiven Zweileitergerät dient der Messstrom I_{M} gleichzeitig zur Versorgung der Messschaltung mit dem Betriebsstrom I_{B}. I_{B} kann kleiner sein als I_{M}, und die Differenz wird über den Laststrom I_{L} ausgeglichen.

Der Shuntregler 30 in Figur 2 arbeitet in Abhängigkeit vom Stromregler 16. Damit die Regelung funktionieren kann, muss am ersten Stellglied 24 immer eine Spannung ungleich Null abfallen. Wenn dieser Spannungsabfall größer wird, bedeutet das, dass die Summe aus I_{B} und I_{L} zu groß ist. Zunächst wird dann der Laststrom I_{L} durch Ansteuern des zweiten Stellgliedes 26 durch den Shuntregler 30 verringert und gegebenenfalls wird dann auch noch I_{B} durch Ansteuerung des ersten Stellglieds 24 mit dem Stromregler 16 verringert. Ein kleinerer Spannungsabfall über dem ersten Stellglied 24 bedeutet hingegen, dass der Stromregler 16 I_{M} vergrößern möchte. Dies ermöglicht eine Erhöhung von I_{B} und macht eventuell eine Vergrößerung von I_{L} nötig.

Oftmals sind Messgeschwindigkeit und/oder Messgenauigkeit von der der Messschaltung zur Verfügung stehenden Leistung abhängig. Der Spannungsabfall entlang I_{M} und I_{B} sollte deshalb möglichst gering sein. Bei der in Figur 2 gezeigten konventionellen Messanordnung 10 kann der Spannungsabfall über dem ersten Stellglied 24 wegen des zugrunde liegenden Regelprinzips jedoch nicht beliebig verringert werden. Handelt es sich bei dem ersten Stellglied 24 beispielsweise um einen MOSFet-Transistor, so darf dieser nie ganz durchgesteuert werden, da dies eine Begrenzung der Regelung bedeuten würde.

Fig. 3 zeigt eine Messanordnung 10 gemäß einem Ausführungsbeispiel der Erfindung. Sofern nicht anders beschrieben, weist die Messanordnung 10 der Figur 3 dieseleben Elemente und Merkmale wie die Messanordnung 10 der Figur 2 auf.

Analog der Messanordnung 10 der Figur 2 weist die Messanordnung 10 der Figur 3 eine Messschaltung 12 zur Ermittlung eines Messwertes einer Messgröße 13 auf, wobei die Messgröße 13 insbesondere mit einem Füllstand eines Mediums in einem Behälter, mit einem Pegelstand eines Gerinnes und/oder Mediums, mit einem Durchfluss eines Mediums, mit einer Fließgeschwindigkeit eines Mediums, mit einer Dichte eines Mediums und/oder mit einem Druck eines Mediums korrelieren kann. Mit anderen Worten kann die Messgröße 13 ein Füllstand, ein Pegelstand, ein Durchfluss, eine Fließgeschwindigkeit, eine Dichte oder ein Druck eines Mediums sein.

Ferner weist die Messanordnung 10 der Figur 3, analog der Figur 2, einen Stromregler 16 und eine mit dem Stromregler 16 und der Messschaltung 12 gekoppelte Sollwertgenerierungsschaltung 14 auf, welche basierend auf einem Ausgangssignal der Messschaltung 12 ein mit dem ermittelten Messwert korrelierendes Spannungssignal 15 an den Stromregler 16 ausgibt. Der Stromregler 16 ist dazu eingerichtet, einen mit dem ermittelten Messwert korrelierenden Messstrom I_{M} mit einer dem Messwert entsprechenden Messstromstärke vorzugeben und/oder einzustellen. Hierzu ist der Stromregler 16 parallel zu dem in der Zuführleitung 18 angeordneten Messwiderstand 22 geschaltet und ermittelt basierend auf dem Spannungsabfall über dem Messwiderstand 22 die Messstromstärke. Der Messwiderstand 22 kann auch in einer Masseleitung der Messanordnung 10 angeordnet sein. Der Stromregler 16 kann etwa eine Messspannung an dem Messwiderstand 22 und so die Messstromstärke vorgeben. Der Stromregler 16 kann ferner einen Differenzverstärker aufweisen und dazu eingerichtet sein, den Spannungsabfall über dem Messwiderstand 22, welcher die Messspannung repräsentieren kann, mit dem von der Sollwertgenerierungsschaltung 14 als Sollwert bereitgestellten Spannungssignal 15 zu vergleichen.

Ebenso analog der Messanordnung 10 aus Figur 2 weist die Messanordnung 10 einen Schutzwiderstand 19 in der Zuführleitung 18 und einen Messausgang 20 zur Ausgabe des mit dem Messwert korrelierenden Messstromes I_{M} auf.

Im Gegensatz zur Messanordnung 10 der Figur 2 ist der Stromregler 16 mit dem zweiten Stellglied 26 gekoppelt, welches in der Abführleitung 28 zur Abführung des Laststromes I_{L} angeordnet ist. Das erste Stellglied 24 ist wiederum in der Zuführleitung 18 angeordnet und dient zum Einstellen des der Messschaltung 12 zugeführten Betriebsstromes I_{B} mit der entsprechenden Betriebsstromstärke. Gleichsam wird der Messschaltung 12 über das erste Stellglied 24 der Betriebsstrom I_{B} zugeführt.

Die Messanordnung 10 weist ferner eine Z-Diode 32 auf, welche mit der Zuführleitung 18 und der Abführleitung 28 gekoppelt ist, wobei die Z-Diode 32 dem ersten Stellglied 24 vorgeschaltet ist und als Spannungsbegrenzung zur Begrenzung einer an das erste Stellglied 24 angelegten Steuerspannung dienen kann. Die Sperrrichtung der Z-Diode 32 kann dabei in Richtung der Abführleitung 28 sein. Die Z-Diode 32 kann dabei auch in der Abführleitung 28 angeordnet sein. Gleichsam kann die Abführleitung 28 dem ersten Stellglied 24 vorgeschaltet sein. Ferner weist die Messanordnung 10 einen parallel zur Z-Diode 32 geschalteten Widerstand 33 auf.

Das erste Stellglied 24 und das zweite Stellglied 26 können jeweils als Bipolartransistoren und/oder als MOSFet-Transistoren ausgestaltet sein.

Bei dem in Figur 3 gezeigten Ausführungsbeispiel kann eine Regelung der Messstromstärke des Messstromes I_{M} und/oder eine Regelung der Laststromstärke des Laststromes I_{L} wie nachfolgend beschrieben erfolgen. Im Gegensatz zur Messanordnung 10 der Figur 2 ist der Stromregler 16 mit dem zweiten Stellglied 26 gekoppelt und dazu eingerichtet, basierend auf einem Vergleich der Messspannung und dem als Sollwert von der Sollwertgenerierungsschaltung 14 ausgegebenen Spannungssignal 15 das zweite Stellglied 26 mit einem Spannungssignal anzusteuern, welches mit der ermittelten Differenz korrelieren kann. Da das zweite Stellglied 26 über die Abführleitung 28 mit dem ersten Stellglied 24 gekoppelt ist, wird so auch das erste Stellglied 24 durch den Stromregler 16, etwa indirekt und/oder mittelbar, angesteuert, gesteuert und/oder eingestellt. Ist beispielsweise die Messstromstärke des Messstromes I_{M} größer als die Betriebsstromstärke des Betriebsstromes I_{B}, so steuert der Stromregler 16 das zweite Stellglied 26 und mittelbar das erste Stellglied 24 derart an, dass die Differenz zwischen Messstrom I_{M} und Betriebsstrom I_{B} als Laststrom I_{L} mit der entsprechenden Laststromstärke über die Abführleitung 28 abgeführt wird, etwa zu einer mit der Abführleitung 28 gekoppelten Masseleitung der Messanordnung 10. Der Laststrom I_{L} kann über die Z-Diode 32, welche dem ersten Stellglied 24 vorgeschaltet ist, abgeführt werden.

Der Stromregler 16 kann somit die Laststromstärke durch Ansteuern des zweiten Stellgliedes 26 und durch Ansteuern des ersten Stellglieds 24 über das Ansteuern des zweiten Stellglieds 28 einstellen und/oder regeln. Dieses Einstellen der Laststromstärke erfolgt dabei unabhängig und/oder nicht in Abhängigkeit von einer über dem ersten Stellglied 24 abfallenden Spannung. Entsprechend muss für die Regelung nicht der Spannungsabfall über dem ersten Stellglied 24 ermittelt werden und der Messschaltung 12 kann insgesamt eine maximal mögliche Leistung zur Verfügung gestellt werden, da der Widerstand des ersten Stellglieds 24 nahezu beliebig verringert werden kann, ohne dass dies Einfluss auf die Regelung hat. Auch entfällt bei dieser Regelung der Shuntregler 30 aus Figur 2, so dass eine vereinfachte Schaltung bereitgestellt ist.

In dem Ausführungsbeispiel der Figur 3 sind somit der Stromregler 16 und der Shuntregler 30 gemäß dem Ausführungsbeispiel der Figur 2 zu einem einzigen Stromregler 16 zusammengefasst. Da der Laststrom I_{L} unabhängig von dem Spannungsabfall über dem ersten Stellglied 24 ist, kann dieser Spannungsabfall beliebig verringert werden, wodurch eine Leistungsaufnahme der Messanordnung 10 optimiert werden kann. Wegen des geringeren Spannungsabfalls am ersten Stellglied 24 steht daher der Messschaltung 12 eine größere Leistung zur Verfügung.

Die Messanordnung 10 kann auch eines oder mehrere RC-Glieder als Tiefpassfilter aufweisen.

Fig. 4 zeigt eine Messanordnung 10 gemäß einem Ausführungsbeispiel der Erfindung. Sofern nicht anders beschrieben, weist die Messanordnung 10 der Figur 4 dieselben Elemente und Merkmale wie die Messanordnungen 10 der Figuren 2 und 3 auf.

Gegenüber der Messanordnung 10 der Figur 3 weist die Messanordnung 10 der Figur 4 ein zwischen das erste Stellglied 24 und die Messschaltung 12 gekoppeltes Schalterelement 34 und eine mit dem Schalterelement 34 gekoppelte Stromüberwachungsschaltung 36 auf, über welche das Schalterelement 34 betätigt werden kann. In einem ersten Zustand des Schalterelements 34 ist die Messschaltung 12 mit dem ersten Stellglied 24 verbunden und wird über das erste Stellglied 24 mit dem Betriebsstrom I_{B} versorgt. In einem zweiten Zustand des Schalterelements 34 wird die Messschaltung 12 von dem ersten Stellglied 24 getrennt, so dass der gesamte Messstrom I_{M} über die Abführleitung 28 als Laststrom I_{L} abgeführt werden kann. Zwischen dem zweiten Stellglied 26 und einer Masseleitung der Messanordnung 10 ist ferner ein Abführwiderstand 38 zur Stabilisierung des zweiten Stellgliedes 26 angeordnet, wobei die Stromüberwachungsschaltung 36 parallel zu dem Abführwiderstand 38 geschaltet ist und über einen Spannungsabfall über dem Abführwiderstand 38 die Messstromstärke des Messstromes I_{M} durch Ermittlung der Laststromstärke des Laststromes I_{L} ermitteln kann. Somit kann, etwa bei Ausfall eines Bauteils der Messanordnung 10, über die Stromüberwachungsschaltung 36 das Messsignal durch Ermittlung der Messstromstärke bestimmt werden. Gleichsam kann das Messsignal so rückgelesen werden. Das auf diese Weise durch die Stromüberwachungsschaltung 36 ermittelte Messsignal kann mit dem korrelierenden Messwert verglichen werden. Das Ergebnis dieses Vergleichs kann ferner über einen Signalausgang 37 der Stromüberwachungsschaltung 36 ausgegeben werden, etwa an eine Auswerteeinheit und/oder eine Leitwarte.

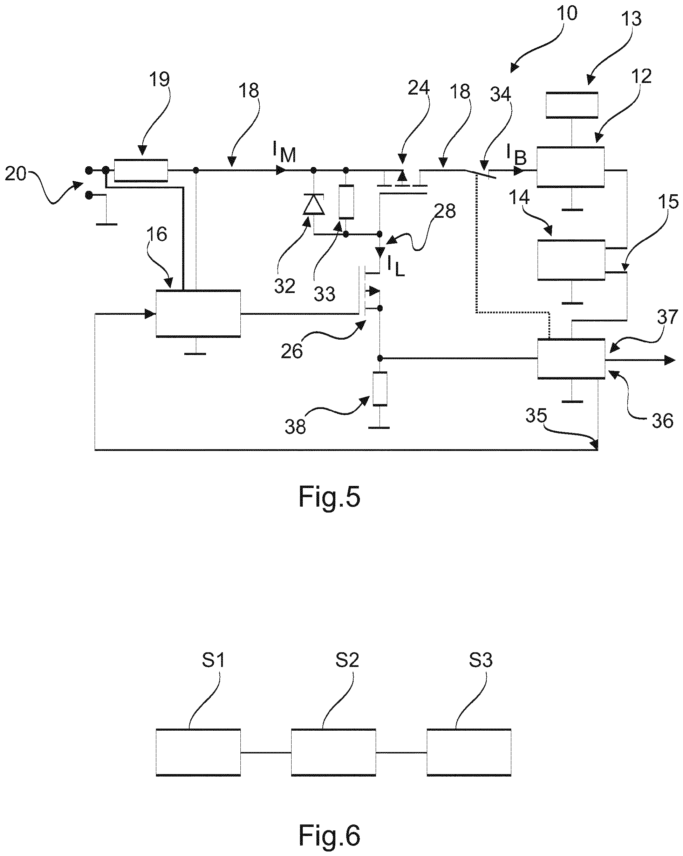

Optional kann die Stromüberwachungsschaltung 36, wie in Figur 5 gezeigt, mit der Sollwertgenerierungsschaltung 14 und mit dem Stromregler 16 gekoppelt sein. Ein als Sollwert von der Sollwertgenerierungsschaltung 14 ausgegebenes Spannungssignal 15 kann durch die Stromüberwachungsschaltung 36 korrigiert und/oder angepasst werden und als korrigierter Sollwert, abermals in Form eines mit dem Messwert korrelierenden Spannungssignals 35, an den Stromregler 16 ausgegeben werden.

Bei der Messanordnung 10 gemäß den Figuren 3-5 kann der Betriebsstrom I_{B} für maximale Messrate und/oder Messgeschwindigkeit so weit erhöht werden, dass der Laststrom gegen Null geht. Da die Regelung des Laststromes I_{L} unabhängig von dem Spannungsabfall am ersten Stellglied 24 erfolgt, kann dieser Spannungsabfall ebenso gegen Null gehen, so dass der Messschaltung 12 die maximal mögliche Leistung zur Verfügung stehen kann. Ferner kann mit dem Schalterelement 34 der Betriebsstrom I_{B} auf Null verringert werden, so dass I_{M} = I_{L} gilt. Die Stromüberwachungsschaltung 36 kann I_{L} bestimmen und beispielsweise für ein Stromrücklesen nutzen. Während der Zeit, in der I_{B} = 0 ist, kann die Messschaltung 12 beispielsweise aus einem Kondensator mit elektrischer Energie versorgt werden.

Fig. 5 zeigt eine Messanordnung 10 gemäß einem Ausführungsbeispiel der Erfindung. Sofern nicht anders beschrieben, weist die Messanordnung 10 der Figur 5 dieseleben Elemente und Merkmale wie die Messanordnungen 10 der Figuren 2 bis 4 auf.

Im Vergleich zur Messanordnung 10 der Figur 4 weist der Abführwiderstand 38 einen niedrigen Temperaturkoeffizienten auf und/oder ist als gegenüber Temperatureinflüssen unempfindlicher Widerstand 38 ausgebildet. Dadurch kann der Messwiderstand 22, welcher in der Regel einen niedrigen Temperaturkoeffizienten aufweist, entfallen und der Stromregler 16 kann parallel zu dem Schutzwiderstand 19 geschaltet sein und über einen Spannungsabfall am Schutzwiderstand 19 die Messstromstärke ermitteln. Mit anderen Worten kann der Messwiderstand 22 mit niedrigem Temperaturkoeffizient nicht in die Zuführleitung 18, welche I_{M} führt, sondern als Abführwiderstand 38 in die Abführleitung 28 eingefügt sein. Der Spannungsabfall über dem Messwiderstand 22 in der Zuführleitung 18 entfällt dadurch. Die Messanordnung 10 kann ferner über einen Analog-Digital-Wandler mit ausreichender Auflösung und kleinem Temperaturkoeffizienten verfügen, so dass der Messstrom I_{M} = I_{L} bei I_{B} = 0 mit der geforderten Genauigkeit ermittelt werden kann. Durch Stromregler 16 und Messwiderstand 22 hervorgerufene Fehler können ferner durch die Anpassung und/oder Korrektur des Sollwerts 15 und Ausgabe eines angepassten und/oder korrigierten Sollwertes 35 durch die Stromüberwachungsschaltung 36 kompensiert werden.

Fig. 6 zeigt ein Flussdiagramm zur Illustration von Schritten eines Verfahrens zum Betreiben eines Messgeräts 100 gemäß einem Ausführungsbeispiel der Erfindung. Das Messgerät 100 weist dabei eine Messanordnung 10, wie etwa in Figuren 3 bis 5 beschrieben, auf.

In einem ersten Schritt S1 wird ein Messwert einer Messgröße 13 mit der Messschaltung 12 ermittelt. In einem weiteren Schritt S2 wird eine mit dem Messwert korrelierende Messstromstärke des Messstromes I_{M} unter Ansteuern des zweiten Stellglieds 26 mit dem Stromregler 16 sowie unter Ansteuern des ersten Stellglieds 24 durch Ansteuern des zweiten Stellglieds 26 mit dem Stromregler 16 eingestellt. In einem weiteren Schritt S3 wird der mit dem Messwert korrelierende Messstrom I_{M} an dem Messausgang 20 der Messanordnung 10 ausgegeben.

Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

## Patentansprüche

1. Messanordnung (10) zur Bestimmung einer Messgröße (13), aufweisend:
eine Messschaltung (12) zur Bestimmung eines Messwertes der Messgröße (13);
einen Messausgang (20) zur Ausgabe eines mit dem Messwert korrelierenden Messstromes (I_{M});
einen Stromregler (16) zur Vorgabe und/oder zum Einstellen einer Messstromstärke des Messstromes (I_{M}) in Abhängigkeit des Messwertes;
ein erstes Stellglied (24), welches in einer Zuführleitung (18) zum Zuführen eines Betriebsstromes (I_{B}) zu der Messschaltung (12) angeordnet ist; und
ein zweites Stellglied (26) zum Abführen eines Laststromes (I_{L}) aus der Zuführleitung (18);
wobei der Stromregler (16) über das zweite Stellglied (26) mit dem ersten Stellglied (24) verbunden ist; und
wobei der Stromregler (16) dazu eingerichtet ist, durch Steuerung des zweiten Stellgliedes (26) das erste Stellglied (24) zu steuern und, insbesondere gleichzeitig, eine Laststromstärke des Laststromes (I_{L}) einzustellen, so dass die Laststromstärke des Laststromes (I_{L}) unabhängig von einer über dem ersten Stellglied (24) abfallenden Spannung eingestellt ist.

2. Messanordnung (10) nach Anspruch 1,
wobei die Messgröße (13) mit einem Füllstand eines Mediums in einem Behälter, mit einem Pegelstand, mit einem Durchfluss, mit einer Fließgeschwindigkeit, mit einer Dichte und/oder mit einem Druck korreliert.

3. Messanordnung (10) nach einem der voranstehenden Ansprüche,
wobei die Messanordnung (10) als 4...20 mA Zweileiter-Messanordnung ausgebildet ist.

4. Messanordnung (10) nach einem der voranstehenden Ansprüche, weiter aufweisend:
eine Sollwertgenerierungsschaltung (14), welche zwischen die Messschaltung (12) und den Stromregler (16) gekoppelt ist,
wobei die Sollwertgenerierungsschaltung (14) dazu eingerichtet ist, basierend auf dem von der Messschaltung (12) ermittelten Messwert ein mit dem Messwert korrelierendes Spannungssignal (15) als Sollwert an den Stromregler (16) auszugeben; und
wobei der Stromregler (16) dazu eingerichtet ist, basierend auf dem Spannungssignal (15) der Sollwertgenerierungsschaltung (14) die Messstromstärke vorzugeben und/oder einzustellen.

5. Messanordnung (10) nach einem der voranstehenden Ansprüche, ferner aufweisend:
einen Messwiderstand (22) zur Bestimmung der Messstromstärke;
wobei der Stromregler (16) einen Differenzverstärker aufweist und parallel zu dem Messwiderstand (22) geschaltet ist.

6. Messanordnung (10) nach einem der voranstehenden Ansprüche, ferner aufweisend:
eine Z-Diode (32) zur Begrenzung einer an das erste Stellglied (24) angelegten Steuerspannung.

7. Messanordnung (10) nach Anspruch 6,
wobei die Z-Diode (32) mit einer Leitung (18) zur Zuführung des Messstromes (I_{M}) zum ersten Stellglied (24) und mit dem zweiten Stellglied (26) gekoppelt ist; und/oder
wobei die Messanordnung ferner einen parallel zur Z-Diode geschalteten Widerstand (33) aufweist.

8. Messanordnung (10) nach einem der voranstehenden Ansprüche,
wobei das erste Stellglied (24) und das zweite Stellglied (26) jeweils einen Bipolar-Transistor und/oder einen MOSFet-Transistor aufweisen; und/oder
wobei das erste Stellglied und das zweite Stellglied jeweils spannungsgesteuert und/oder stromgesteuert sind.

9. Messanordnung (10) nach einem der voranstehenden Ansprüche, weiter aufweisend:
einen Abführwiderstand (38) zur Stabilisierung des zweiten Stellgliedes (26);
wobei der Abführwiderstand (38) zwischen das zweite Stellglied (26) und eine Masseleitung der Messanordnung gekoppelt ist.

10. Messanordnung (10) nach einem der voranstehenden Ansprüche, weiter aufweisend:
ein Schalterelement (34);
wobei das Schalterelement (34) dazu eingerichtet ist, dass in einem ersten Zustand des Schalterelements (34) der Messschaltung (12) der Betriebsstrom (I_{B}) zugeführt wird; und
wobei das Schalterelement (34) dazu eingerichtet ist, dass in einem zweiten Zustand des Schalterelements der gesamte Messstrom (I_{M}) als Laststrom (I_{L}) über das zweite Stellglied (26) abgeführt wird.

11. Messanordnung (10) nach Anspruch 10, weiter aufweisend:
eine Stromüberwachungsschaltung (36), welche dazu eingerichtet ist, zumindest in dem zweiten Zustand des Schalterelements (34) die Messstromstärke des Messstromes (I_{M}) unter Bestimmen der Laststromstärke des Laststromes (I_{L}) zu ermitteln; und/oder
wobei die Stromüberwachungsschaltung (36) dazu eingerichtet ist, das Schalterelement (34) zu betätigen.

12. Messanordnung nach Anspruch 11,
wobei die Stromüberwachungsschaltung (36) mit der Messschaltung (12) und mit dem Stromregler (16) gekoppelt ist;
wobei die Stromüberwachungsschaltung (36) dazu eingerichtet ist, ein mit dem Messwert korrelierendes Spannungssignal (35) als Sollwert an den Stromregler (16) auszugeben.

13. Messgerät (100) mit einer Messanordnung (10) nach einem der voranstehenden Ansprüche;
wobei das Messgerät (100) ein Füllstandmessgerät, ein Pegelmessgerät, ein Fließgeschwindigkeitsmessgerät, ein Durchflussmessgerät, ein Dichtemessgerät und/oder ein Druckmessgerät ist; und/oder
wobei das Messgerät (100) als Zweileiter-Messgerät, insbesondere als 4...20 mA Zweileiter-Messgerät, ausgebildet ist.

14. Verfahren zum Betreiben eines Messgeräts (100) mit einer Messanordnung (10) nach einem der Ansprüche 1 bis 12, das Verfahren aufweisend die Schritte:
Ermitteln eines Messwertes einer Messgröße (13);
Einstellen einer mit dem Messwert korrelierenden Messstromstärke unter Ansteuern des zweiten Stellglieds (26) mit dem Stromregler (16) sowie unter Ansteuern des ersten Stellglieds (24) durch Ansteuern des zweiten Stellglieds (26) mit dem Stromregler (16); und
Ausgeben des mit dem Messwert korrelierenden Messstromes (I_{M}) an dem Messausgang (20).

## Claims

1. A measurement arrangement (10) for determining a measured quantity (13), comprising:
a measuring circuit (12) configured to determine a measured value of the measured quantity (13);
a measurement output (20) configured to emit a measured current (I_{M}) correlating with the measured value;
a current controller (16) configured to specify and/or adjust a measured intensity of the measured current (I_{M}) in dependence of the measured value;
a first control element (24) arranged in a supply line (18) for supplying the measuring circuit (12) with an operating current (I_{B}); and
a second control element (26) for purging a load current (I_{L}) of the supply line (18);
wherein the current controller (16) is coupled to the first control element (24) via the second control element (26); and
wherein the current controller (16) is configured to control the first control element (24) by regulating the second control element (26), and, in particular simultaneously, to regulate a load current intensity of the load current (I_{L}) such that the load current intensity of the load current (I_{L}) is controlled independent of a voltage drop across the first control element (24).

2. The measurement arrangement (10) of claim 1,
wherein the measured quantity (13) correlates with a fill level of a medium in a container, with a filling level, with a flow, with a flow velocity, with a density and/or with a pressure.

3. The measurement arrangement (10) of one of the preceding claims,
wherein the measurement arrangement (10) is configured as a 4...20 mA two-wire circuit measurement arrangement.

4. The measurement arrangement (10) of one of the preceding claims, further comprising:
a setpoint generator circuit (14), which is coupled between the measuring circuit (12) and the current controller (16),
wherein the setpoint generator circuit (14) is configured to provide to the current controller (16), based on the measured value determined by the measuring circuit (12), a voltage signal (15) correlating with the measured value as a setpoint; and
wherein the current controller (16) is configured to specify and/or adjust the intensity of the measured current based on the voltage signal (15) of the setpoint generator circuit (14).

5. The measurement arrangement (10) of one of the preceding claims, further comprising:
a measurement resistor (22) for determining the intensity of the measured current;
wherein the current controller (16) comprises a differential amplifier and is connected in parallel to the measurement resistor (22).

6. The measurement arrangement (10) of one of the preceding claims, further comprising:
a Z-diode (32) for limiting a control voltage applied to the first control element (24).

7. The measurement arrangement (10) of claim 6,
wherein the Z-diode (32) is coupled to a line (18) for supplying the first control element (26) with the measured current (I_{M}) and to the second control element; and/or
wherein the measurement arrangement further comprises a resistor (33) connected in parallel to the Z-diode.

8. The measurement arrangement (10) of one of the preceding claims, wherein the first control element (24) and the second control element (26) each comprise a bipolar transistor and/or a MOSFET transistor; and/or
wherein the first control element and the second control element each are voltage-controlled and/or current-controlled.

9. The measurement arrangement (10) of one of the preceding claims, further comprising:
a purge resistor (38) for stabilizing the second control element (26);
wherein the purge resistor (38) is coupled between the second control element (26) and a ground line of the measurement arrangement.

10. The measurement arrangement (10) of one of the preceding claims, further comprising:
a switching element (34);
wherein the switching element (34) is configured to supply the measuring circuit (12) with the operating current (I_{B}) when the switching element is in a first state; and
wherein the switching element (34) is configured such that the measured current (I_{M}) is purged as load current (I_{L}) via the second control element (26) when the switching element (34) is in a second state.

11. The measurement arrangement (10) of claim 10, further comprising:
a current monitoring circuit (36) configured to determine the intensity of the measured current (I_{M}) at least when the switching device (34) is in the second state by determining the intensity of the load current (I_{L}); and/or
wherein the current monitoring circuit (36) is configured to actuate the switching device (34).

12. The measurement arrangement (10) of claim 11,
wherein the current monitoring circuit (36) is coupled to the measuring circuit (12) and to the current controller (16);
wherein the current monitoring circuit (36) is configured to provide to the current controller (16) a voltage signal (35) correlating with the measured value as a setpoint.

13. A measuring device (100) with a measurement arrangement (10) of one of the preceding claims;
wherein the measuring device (100) is a fill level measuring device, a level measuring device, a flow velocity measuring device, a flow measuring device, a density measuring device and/or a pressure measuring device; and/or
particularly wherein the measuring device (100) is configured as 4...20 mA two-wire circuit measurement device.

14. A method for operating a measuring device (100) with a measurement arrangement (10) of one of the claims 1 to 12, the method comprising the following steps:
determining a measured value of a measured quantity (13);
Adjusting a current intensity correlating with the measured value by actuating the second control element (26) with the current controller (16) and by actuating the first control element (24) based on actuating the second control element (26) with the current controller (16); and
Outputting at the measurement output (20) the measured current (I_{M}) correlating with the measured value.

## Revendications

1. Dispositif de mesure (10) pour déterminer une grandeur de mesure (13) comprenant:
un circuit de mesure (12) configuré pour déterminer une valeur de mesure de la grandeur de mesure (13);
une sortie de mesure (20) configurée pour l'émission d'un courant de mesure (I_{M}) en corrélation avec la valeur de mesure;
un régulateur de courant (16) configuré pour spécifier et/ou réguler une intensité de mesure du courant de mesure (I_{M}) en fonction de la valeur de mesure;
un premier actionneur (24) agencé dans une conduite d'alimentation (18) pour alimenter le circuit de mesure en courant de fonctionnement (I_{B}); et
un deuxième actionneur (26) configuré pour décharger un courant de charge (I_{L}) de la conduite d'alimentation (18);
dans lequel le régulateur de courant (16) est relié au premier régulateur (24) via le deuxième régulateur (26); et
dans lequel le régulateur de courant (16) est configuré pour réguler le premier actionneur (24) via régulation du deuxième actionneur (26) et, en particulier de manière concomitante, pour régler une intensité de courant de charge du courant de charge (I_{L}) de façon à ce que l'intensité de courant de charge du courant de charge (I_{L}) est réglée indépendamment d'une chute de tension via le premier régulateur (24).

2. Dispositif de mesure (10) selon la revendication 1,
dans lequel la grandeur de mesure (13) corrèle avec un niveau de remplissage d'un médium dans un contenant, avec un niveau d'eau, avec un débit, avec une vitesse d'écoulement, avec une densité et/ou avec une pression.

3. Dispositif de mesure (10) selon l'une quelconque des revendications précédentes,
selon lequel le dispositif de mesure (10) est configuré comme étant un dispositif de mesure à deux conducteurs 4...20 mA.

4. Dispositif de mesure (10) selon l'une quelconque des revendications précédentes, comprenant en outre:
un circuit générateur d'une valeur de consigne (14) relié entre le circuit de mesure (12) et le régulateur de courant (16),
dans lequel le circuit générateur d'une valeur de consigne (14) est configuré pour émettre au régulateur de courant (16), sur la base de la valeur de mesure déterminer par le circuit de mesure (12), un signal de tension (15) en corrélation avec la valeur de mesure comme valeur de consigne; et
dans lequel le régulateur de courant (16) est configuré pour imposer et/ou régler l'intensité du courant de mesure sur la base du signal de tension (15) du circuit générateur d'une valeur de consigne (14).

5. Dispositif de mesure (10) selon l'une quelconque des revendications précédentes, comprenant en outre:
une résistance de mesure (22) configurée pour déterminer l'intensité du courant de mesure;
dans lequel le régulateur de courant (16) comprend un amplificateur différentiel et est branché en parallèle avec la résistance de mesure (22).

6. Dispositif de mesure (10) selon l'une quelconque des revendications précédentes, comprenant en outre:
une diode Zener (32) configurée pour délimiter une tension de commande appliquée au premier actionneur (24).

7. Dispositif de mesure (10) selon la revendication 6,
dans lequel la diode Zener (32) est couplée à une conduite (18) pour alimenter en courant de mesure (I_{M}) le premier actionneur (26) et au deuxième actionneur; et/ou
dans lequel le dispositif de mesure comprend également une résistance (33) branché en parallèle avec la diode Zener.

8. Dispositif de mesure (10) selon l'une quelconque des revendications précédentes,
dans lequel le premier actionneur (24) et le deuxième actionneur (26) comprennent chacun un transistor bipolaire et/ou un transistor MOSFET; et/ou
dans lequel le premier actionneur et le deuxième actionneur sont tous deux commandés par tension et/ou commandé par courant.

9. Dispositif de mesure (10) selon l'une quelconque des revendications précédentes, comprenant en outre:
une résistance de décharge (38) configurée pour stabiliser le deuxième actionneur (26);
dans lequel la résistance de décharge (38) est couplée entre le deuxième actionneur (26) et un fil de terre du dispositif de mesure.

10. Dispositif de mesure (10) selon l'une quelconque des revendications précédentes, comprenant en outre:
un élément commutateur (34);
dans lequel l'élément commutateur (34) est configuré pour que le circuit de mesure (12) soit approvisionné en courant de fonctionnement (I_{B}) lorsque l'élément commutateur se trouve dans un premier état ; et
dans lequel l'élément commutateur (34) est configuré pour que la totalité du courant de mesure (I_{M}) en tant que courant de charge (I_{L}) soit déchargée via le deuxième actionneur lorsque l'élément commutateur (34) se trouve dans un deuxième état.

11. Dispositif de mesure (10) selon la revendication 10, comprenant en outre :
un circuit de surveillance de courant (36) étant configuré pour déterminer l'intensité de courant de mesure du courant de mesure (I_{M}) au moins lorsque l'élément commutateur (34) se trouve dans le deuxième état en déterminant l'intensité de courant de charge du courant de charge (I_{L}) ; et/ou
dans lequel le circuit de surveillance de courant (36) est configuré pour actionner l'élément commutateur (34).

12. Dispositif de mesure selon la revendication 11,
dans lequel le circuit de surveillance de courant (36) est lié au circuit de mesure (12) et au régulateur de courant (16) ;
dans lequel le circuit de surveillance de courant (36) est configuré pour délivrer au régulateur de courant (16) comme valeur de consigne un signal de tension (35) en corrélation avec la valeur de mesure.

13. Appareil de mesure (100) avec un dispositif de mesure (10) selon l'une quelconque des revendications précédentes;
dans lequel l'appareil de mesure (100) est un appareil de mesure de niveau de remplissage, un appareil de mesure de niveau, un appareil de mesure de vitesse d'écoulement, un appareil de mesure de débit, un appareil de mesure de densité et/ou un appareil de mesure de pression ; et/ou
dans lequel l'appareil de mesure (100) est notamment configuré comme étant un dispositif de mesure à deux conducteurs 4...20 mA.

14. Procédé pour le fonctionnement d'un appareil de mesure (100) avec un dispositif de mesure (10) selon l'une des revendications 1 à 12, procédé **caractérisé par** les étapes suivantes consistant à :
déterminer une valeur de mesure d'une grandeur de mesure (13);
régler une intensité de courant en corrélation avec la valeur de mesure en commandant le deuxième actionneur (26) avec le régulateur de courant (16) et en commandant le premier actionneur (24) en commandant le deuxième actionneur (26) avec le régulateur de courant (16) ; et
délivrer à la sortie de mesure (20) le courant de mesure (I_{M}) en corrélation avec la valeur de mesure.
